# FASCICULE DE BREVET EUROPEEN

(11) **EP 1 642 177 B1**
(45) Date de publication et mention de la délivrance du brevet: **05.05.2010**
(21) Numéro de dépôt: 04740164.1
(22) Date de dépôt: 22.06.2004
(51) Int. Cl.: G04G 21/00, G04B 37/14, A44C 5/00

(54) **BRACELET A FERMOIR AYANT DES MOYENS DE CONNEXION ELECTRIQUE**
GREIFKLAMMER MIT ELEKTRISCHEN VERBINDUNGSMITTELN
CLASP BRACELET HAVING ELECTRICAL CONNECTION MEANS

(30) Priorité: 25.06.2003 EP 03014249
(43) Date de publication de la demande: 05.04.2006
(73) Titulaire: The Swatch Group Management Services AG, 2501 Biel (CH)
(72) Inventeur: EHRSAM, Nicolas, CH-2533 Evilard (CH); MUELLER, Jacques, CH-2732 Reconvilier (CH); MEYRAT, Clément, CH-2525 Le Landeron (CH)
(74) Mandataire: Ravenel, Thierry Gérard Louis
(86) Numéro de dépôt international: PCT/EP2004/006735
(87) Numéro de publication internationale: WO 2004/114030

(56) Documents cités:
- EP-A- 1 317 043
- WO-A-97/02513
- CH-A- 661 172
- FR-A- 2 641 092
- PATENT ABSTRACTS OF JAPAN vol. 2003, no. 09, 3 septembre 2003 (2003-09-03) & JP 2003 140771 A (CITIZEN WATCH CO LTD), 16 mai 2003 (2003-05-16)

## Description

L'invention concerne un bracelet à fermoir comprenant des moyens de connexion électrique pour être reliés à au moins un composant électrique ou électronique. Le bracelet peut être avantageusement un bracelet d'un objet portable, tel qu'une montre. Dans ce cas, le composant électrique ou électronique peut être logé dans un boîtier de l'objet portable ou dans le bracelet.

L'invention concerne également une montre-bracelet comprenant un fermoir et au moins un composant électrique ou électronique relié électriquement à des moyens de connexion électrique.

Par composants électriques ou électroniques, on entend tout élément électrique ou électronique pour l'exécution de certaines fonctions sans limitation. Il peut s'agir par exemple de batteries ou accumulateurs d'énergie, et de circuits électroniques ou intégrés.

Deux types de fermoir sont habituellement utilisés pour des bracelets ou des montres-bracelets. Il peut s'agir d'un fermoir pour un bracelet dit ouvert ou d'un fermoir pour un bracelet dit fermé.

Le fermoir pour bracelet ouvert comprend classiquement une boucle et un ardillon fixés à l'aide d'une tige à l'extrémité libre de l'un des brins du bracelet. L'extrémité libre de l'autre brin est passée sous la boucle puis immobilisée par l'ardillon qui pénètre dans l'un des trous pratiqués dans ledit autre brin. Un éventuel passant peut permettre d'immobiliser l'extrémité libre de l'autre brin.

Le fermoir pour bracelet fermé est classiquement du type à boucle déployante. Généralement dans sa forme la plus simple, ce fermoir à boucle déployante comprend une lame de base sur laquelle est susceptible de se rabattre au moins une lame pivotante sur la lame de base. Ces lames sont attachées ensemble par l'une de leurs extrémités au moyen d'une articulation. Habituellement, des moyens de fermeture, tel qu'un dispositif à cran permettent aux lames de s'accrocher l'une sur l'autre en position de fermeture.

Comme le bracelet ou la montre-bracelet sont des objets quotidiennement portés au poignet d'un utilisateur, il a été imaginé de les munir de divers composants électriques ou électroniques autres que des circuits garde-temps pour exécuter certaines fonctions. Ils peuvent comprendre des composants, tels que des accumulateurs ou des circuits électroniques notamment pour des opérations de transmission de données. Des liaisons électriques entre les divers composants portés par le bracelet ou intégrés à ce dernier et ceux contenus dans le boîtier de la montre peuvent en outre être réalisées.

Pour charger un accumulateur ou transmettre des données entre un appareil électrique et au moins un circuit électronique disposé dans le boîtier de la montre, des moyens spécifiques de connexion électrique doivent parfois être prévus à travers le boîtier de la montre. Par cette connexion électrique, il est ainsi possible de charger électriquement un accumulateur de la montre si l'appareil électrique est un chargeur, ou de transférer des données entre le circuit électronique de la montre et l'appareil électrique.

Cependant, ces moyens de connexion connus n'ont aucune autre fonction que de permettre une connexion électrique entre l'appareil électrique et le ou les composants électroniques. Ces moyens de connexion réalisés à travers le boîtier ou sur un brin du bracelet nuisent généralement à l'esthétique de la montre-bracelet ou du bracelet. De plus, les moyens de connexion doivent en principe être protégés lorsqu'ils ne sont pas connectés à l'appareil électrique de manière à ne pas perturber le ou les composants électroniques devant exécuter certaines fonctions.

A ce titre on peut citer le document US 4,323,996 qui décrit une montre-bracelet électronique qui comprend un circuit électronique dans le boîtier et des moyens de connexion électrique reliés au circuit électronique. Ces moyens de connexion électrique sont constitués notamment par des bornes de contact électrique qui sont placées sous le fond du boîtier de la montre. Un capuchon connecteur des moyens de connexion est fixé sous le boîtier pour venir connecter les bornes de contact. Un câble électrique est relié au capuchon connecteur et est terminé par un connecteur afin d'établir une connexion électrique avec un appareil électrique.

Un inconvénient de la montre-bracelet décrite dans le document US 4,323,996, est qu'un élément supplémentaire de protection, tel que le capuchon, doit être ajouté sous le fond du boîtier de la montre pour relier électriquement le circuit électronique par les bornes de contact électrique du fond du boîtier à un appareil électrique. Ce capuchon supplémentaire augmente inutilement l'épaisseur de la montre, et nuit à l'aspect esthétique de la montre.

Dans le document WO 97/02513, il est décrit un dispositif électronique sous la forme d'une montre-bracelet. Le bracelet de la montre est formé pour servir de batterie pour l'alimentation de composants électroniques disposés dans le boîtier de la montre. Un circuit électronique peut être intégré dans le bracelet pour la gestion de différents paramètres liés à la batterie. Cependant, il n'est pas prévu de moyens de connexion susceptibles de pouvoir être connectés à un appareil électrique.

Dans le document FR 2 641 092, il est décrit une montre-bracelet, dont une extrémité du bracelet, à fixer au boîtier de la montre, comprend un connecteur électrique pour être relié en position d'ouverture d'une pièce de fermeture du boîtier à un connecteur complémentaire d'un appareil électrique, tel qu'une station d'ordinateur. Un composant électronique. tel qu'une mémoire non volatile, est monté dans le brin du bracelet portant le connecteur électrique et relié audit connecteur. Ce connecteur électrique du bracelet n'est par contre pas disposé sur la montre-bracelet de manière à ne pas nuire à l'esthétisme de la montre, et n'est pas suffisamment bien protégé.

L'invention a donc pour but de fournir un bracelet à fermoir qui comprend des moyens de connexion électrique palliant les inconvénients de l'art antérieur susmentionné. Les moyens de connexion sont disposés sur le bracelet de manière à ne pas nuire à l'esthétisme dudit bracelet lorsque le bracelet est porté au poignet d'un utilisateur.

A cet effet, l'invention a pour objet un bracelet à fermoir, qui comprend les caractéristiques mentionnées dans la revendication 1.

Un avantage du bracelet à fermoir selon l'invention est que le connecteur électrique est placé dans une partie du fermoir d'un bracelet destiné à être porté au poignet d'un utilisateur. De ce fait en position de fermeture du fermoir, il peut être protégé de tout dommage mécanique ou des influences de l'environnement sans nuire également à l'aspect esthétique dudit bracelet.

Le fermoir du bracelet peut être à boucle déployante avec une base sur laquelle deux lames sont articulées à chaque extrémité de la base. L'autre extrémité de chaque lame est articulée au niveau d'une extrémité de chaque brin du bracelet ou de l'une et de l'autre extrémités d'un même brin du bracelet. Dans une position de fermeture du fermoir, des moyens de fermeture, tel qu'un dispositif à cran traditionnel, bloquent une partie de chaque lame dans une partie de la base. Un bouton, qui est par exemple disposé sur la base, peut être manuellement actionné pour permettre de les libérer pour ouvrir le fermoir. Un soufflet du fermoir peut également être fixé à une extrémité d'un brin du bracelet pour enfermer et protéger le connecteur électrique en position de fermeture du fermoir.

Le connecteur électrique placé à une extrémité d'un des brins du bracelet est de préférence un connecteur du type à bus série universel pour pouvoir être connecté à un connecteur de forme complémentaire d'une station d'ordinateur.

Le composant électronique peut être une mémoire non volatile, par exemple une mémoire Flash, qui peut contenir des données personnelles du porteur dudit bracelet. Cette mémoire peut être placée sur un support souple ou rigide relié directement au connecteur électrique.

De préférence, le brin du bracelet recevant le connecteur électrique comprend une partie creuse depuis l'extrémité liée au fermoir qui s'étend sur au moins une portion de la longueur du brin. La partie creuse est délimitée par une paroi supérieure et une paroi inférieure espacées par deux parois latérales. Une partie du connecteur électrique avec le support de la mémoire est logée dans une portion de la partie creuse. Cette partie du connecteur peut comprendre également dans une direction transversale au bracelet une ouverture traversante pour le passage d'une goupille de fixation au bracelet.

Plusieurs ouvertures de forme circulaire régulièrement espacées sont réalisées de part et d'autre des parois latérales de la partie creuse du brin souple et dans le sens de la longueur du bracelet. De cette façon avant le montage de la partie du connecteur à fixer avec le fermoir au bracelet, la taille du bracelet peut être adaptée au poignet d'un utilisateur en découpant une portion de la partie creuse. Après cette opération, une goupille de fixation traverse un manchon du fermoir, une ouverture de chaque paroi latérale du brin de bracelet et l'ouverture de la partie du connecteur à fixer.

Le fermoir peut avantageusement comprendre une partie mâle et une partie femelle de forme complémentaire à la partie mâle de manière à pouvoir insérer la partie mâle dans la partie femelle en position de fermeture du bracelet. Le connecteur électrique du fermoir peut être par exemple la partie mâle.

Dans le cas d'un fermoir à boucle déployante, la base peut être extensible. Pour ce faire, elle comprend un réceptacle et un élément pouvant coulisser en partie dans le réceptacle. Cet élément est maintenu en partie à l'intérieur du réceptacle par un ressort de rappel. Un premier membre du fermoir est articulé à une extrémité d'une partie de l'élément sortant du réceptacle, et un second membre du fermoir est articulé à une extrémité opposée du réceptacle. Le premier membre est fixé à une extrémité du premier brin, alors que le second membre est fixé à une extrémité du second brin. Le ressort de rappel dans le réceptacle tire l'élément vers l'intérieur du réceptacle de manière à assurer la fermeture du fermoir quand le connecteur en tant que partie mâle est inséré dans la partie femelle du second brin.

Le connecteur électrique en tant que partie mâle du fermoir peut comprendre également au moins une ouverture sur une paroi extérieure faisant partie de moyens de fermeture du fermoir. Une extrémité d'un organe de blocage de la partie femelle du fermoir est introduite dans l'ouverture de la partie mâle dans une position de fermeture du fermoir. L'organe de blocage est monté rotatif autour d'un axe de rotation de la partie femelle et peut être actionné manuellement à l'encontre de la force de rappel d'un ressort pour l'ouverture du fermoir.

L'invention a également pour but de fournir une montre-bracelet à fermoir qui comprend des moyens de connexion électrique palliant les inconvénients de l'art antérieur susmentionné. Les moyens de connexion sont disposés sur le bracelet de manière à ne pas nuire à l'esthétique de la montre-bracelet lorsqu'elle est portée au poignet d'un utilisateur.

A cet effet, l'invention a également pour objet une montre-bracelet, qui comprend les caractéristiques mentionnées dans la revendication 15.

La montre-bracelet peut avantageusement comprendre dans le boîtier un composant électrique ou électronique autre qu'un circuit garde-temps. Le composant est électriquement relié par des pistes conductrices à travers le boîtier et un brin du bracelet au connecteur électrique qui est disposé dans une partie du fermoir. Lorsque le fermoir est en position ouverte, le connecteur peut être connecté à un connecteur de forme complémentaire d'un appareil électrique, tel qu'une station d'ordinateur pour le transfert d'énergie et/ou le transfert unidirectionnel ou bidirectionnel de données.

Les buts, avantages et caractéristiques du bracelet ou de la montre-bracelet, apparaîtront mieux dans la description suivante de modes de réalisation de l'invention en liaison avec les dessins dans lesquels :
Les figures 1a et 1b représentent une vue latérale d'une partie du bracelet à fermoir dans une position de fermeture du fermoir à boucle déployante et une vue tridimensionnelle d'une partie du bracelet dans une position d'ouverture du fermoir selon un premier mode de réalisation de l'invention,
la figure 2 représente partiellement les éléments du fermoir du bracelet avec le connecteur électrique sous forme éclatée avant leur montage à l'extrémité du brin du bracelet des figures 1a et 1b,
les figures 3a à 3c représentent deux vues latérales d'une partie du bracelet à fermoir dans une position d'ouverture du fermoir à boucle déployante et une vue latérale d'une partie du bracelet dans une position de fermeture du fermoir selon un second mode de réalisation de l'invention,
les figures 4a et 4b représentent une vue latérale et une vue de dessus d'une partie du bracelet à fermoir dans une position d'ouverture du fermoir selon un troisième mode de réalisation de l'invention, et
la figure 5 représente une vue de dessous d'une montre-bracelet selon l'invention qui comprend un bracelet à fermoir des figures 4a et 4b.

Dans la description suivante, les divers moyens mécaniques permettant d'opérer l'ouverture ou la fermeture d'un fermoir d'un bracelet ou d'une montre-bracelet ne seront pas expliqués en détail, car ils font partie des connaissances générales d'un homme du métier dans ce domaine technique.

Il est à noter que la dimension de tous les éléments du bracelet à fermoir ou de la montre-bracelet selon l'invention n'est pas représentée précisément sur les figures. Ces éléments ne sont présentés qu'à titre illustratif et peuvent donc subir de multiples changements dimensionnels dans le cadre de l'invention.

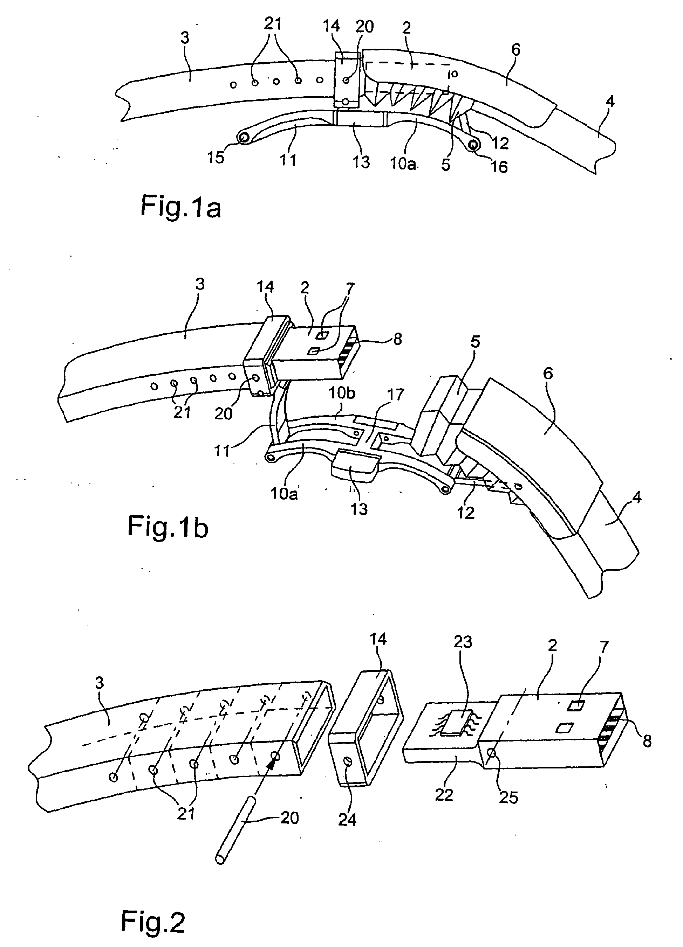

Aux figures 1a et 1b, un premier mode de réalisation du bracelet à fermoir 1 à boucle déployante est présenté dans une position de fermeture et dans une position d'ouverture. Le bracelet peut comprendre un unique brin ou deux brins 3 et 4 dans le cas où il est utilisé pour une montre-bracelet. Le bracelet comprend un fermoir 1 du type à boucle déployante dont une partie est fixée à une extrémité du brin 3 et une autre partie est fixée à une extrémité du brin 4. L'autre extrémité de chaque brin, non représentée, peut être classiquement montée de manière rotative au boîtier d'une montre-bracelet. Des moyens de connexion électrique, tels qu'un connecteur électrique 2, sont placés à l'extrémité du brin 3 en tant que partie du fermoir.

Le fermoir 1 à boucle déployante comprend notamment une lame de base rigide en forme de H et deux lames rigides 11 et 12 articulées chacune à une des extrémités respectives de la lame de base. Cette lame de base est constituée de deux bras 10a et 10b parallèles qui sont espacés l'un de l'autre par une barre centrale 17. Une première extrémité de chaque lame 11 et 12 est donc montée pivotante entre les extrémités des bras 10a et 10b chacune autour d'un axe de rotation 15 et 16.

Une seconde extrémité de la lame 11 est reliée de manière rotative à un manchon 14 de fixation du fermoir 1 à une extrémité du brin 3, alors qu'une seconde extrémité de l'autre lame 12 est reliée de manière rotative à une pièce de fermeture 6 fixée à une extrémité du brin 4. Cette pièce de fermeture est de préférence de section transversale en forme de U.

Les lames 11 et 12 comprennent également de manière connue, des moyens de fermeture non représentés sur les figures 1 a et 1 b pour coopérer avec un dispositif à cran disposé entre les bras 10a et 10b en position de fermeture du fermoir. Un bouton 13 de la lame de base peut être manuellement pressé pour pouvoir libérer les lames pivotantes de leur position de fermeture.

Le brin 3 du bracelet comprend une partie creuse au moins à une extrémité côté fermoir pour pouvoir monter les moyens de connexion électrique 2 en tant que partie du fermoir. La partie creuse s'étend sur au moins une portion de la longueur du brin 3. Cette partie creuse est délimitée par une paroi supérieure et une paroi inférieure espacées par deux parois latérales.

Plusieurs ouvertures 21 régulièrement espacées sont réalisées de part et d'autre des parois latérales de la partie creuse du brin souple et dans le sens de la longueur du bracelet. Le manchon 14, qui comprend une ouverture sur chaque paroi latérale, peut être fixé au brin 3 au moyen d'une goupille 20 passant à travers une des ouvertures de chaque paroi latérale de la partie creuse à proximité de l'extrémité du brin 3. Comme expliqué en référence à la figure 2, le brin 3 peut être découpé de manière à ajuster la taille du bracelet au poignet d'un utilisateur dudit bracelet.

Les moyens de connexion sont constitués de préférence par un connecteur à bus série universel 2 dénommé USB (Universal Serial Bus en terminologie anglaise). Ce connecteur 2 peut ainsi être branché à un connecteur de forme complémentaire d'un appareil électrique, tel qu'une station d'ordinateur, afin d'opérer une transmission de données avec un composant ou circuit électronique du bracelet.

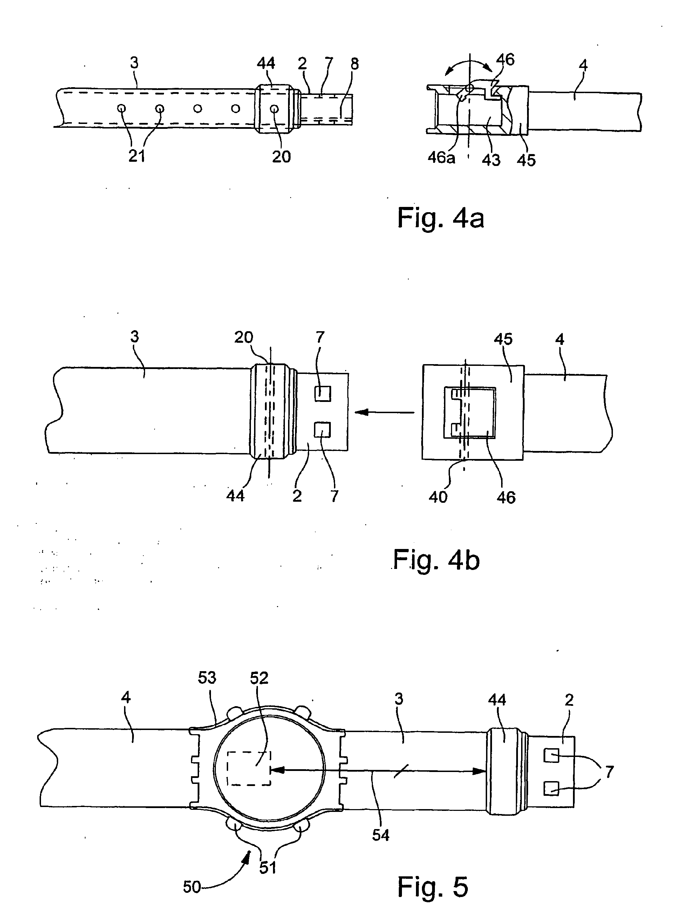

Ce connecteur 2 comprend certaines pistes conductrices métalliques 8 de connexion électrique qui sont disposées sur une plaque support. Cette plaque support est placée à l'intérieur d'une partie tubulaire de préférence métallique de section transversale rectangulaire. Cette partie tubulaire comprend des ouvertures 7 disposées au-dessus et au-dessous. Ces ouvertures peuvent faire partie des moyens de fermeture comme expliqué ci-après en référence aux figures 4a et 4b.

Quand le connecteur 2 est branché à un connecteur de forme complémentaire notamment d'une station d'ordinateur, les pistes métalliques 8 viennent en contact avec des pistes respectives du connecteur de ladite station d'ordinateur. De cette façon, une transmission de données et/ou d'énergie peut être réalisée entre la station d'ordinateur et un composant électronique relié au connecteur.

Une partie du connecteur électrique 2 comprend une ouverture traversante disposée dans une direction transversale au bracelet pour le passage de la goupille 20 de fixation. Une fois que la taille du brin 3 a été ajustée, la partie du connecteur 2 est introduite dans la partie creuse du brin 3 pour être fixée avec le manchon 14 par la goupille 20 à l'extrémité du brin 3. De préférence, la partie du connecteur 2 introduite dans la partie creuse est en contact avec les surfaces intérieures de ladite partie creuse de manière à être maintenue fixement à l'extrémité du brin 3.

Pour protéger le connecteur 2 en position de fermeture du fermoir, il peut être prévu un soufflet 5 fixé à l'extrémité du brin 4. Ce soufflet est légèrement comprimé contre le manchon 14 en position de fermeture en enfermant le connecteur électrique 2. La pièce de fermeture 6 entoure le soufflet et permet de faciliter la fermeture du fermoir pour maintenir une partie des lames 11 et 12 entre les bras 10a et 10b.

Bien entendu, la pièce de fermeture 6 et le manchon 14 peuvent comprendre des moyens de fermeture complémentaires non représentés pour remplacer les moyens de fermeture des lames 11 et 12 et le dispositif à cran. Dans ce cas de figure, le bouton 13 n'est plus nécessaire.

A la figure 2, les éléments du fermoir du côté du brin 3 sont partiellement montrés sous une forme éclatée avant leur montage définitif.

On remarque qu'un composant électronique, tel qu'une mémoire non volatile 23, est fixé sur un support à pistes conductrices 22. Cette mémoire peut être de préférence une mémoire Flash dans laquelle des données personnelles peuvent être stockées relatives par exemple à l'utilisateur du bracelet. Ce support est lié directement à une extrémité du connecteur électrique 2, qui est opposée à l'extrémité servant à la connexion à un appareil électrique. Une connexion électrique est réalisée de manière connue entre les pattes métalliques de connexion de la mémoire encapsulée et les pistes conductrices 8 du connecteur 2.

Plusieurs ouvertures circulaires régulièrement espacées 21 sont pratiquées sur chaque paroi latérale du brin 3 permettant de fixer le manchon et le connecteur à différentes positions du brin 3 à l'aide de la goupille 20. Avant de fixer le manchon 14 et le connecteur 2 à l'extrémité du brin 3, il est possible de découper le brin 3 de manière à ajuster la taille du bracelet au poignet de l'utilisateur. Des traits interrompus sont représentés sur le brin 3 à la figure 2 pour montrer les endroits où le brin peut par exemple être découpé pour ajuster la taille du bracelet.

Après avoir découpé le brin 3 à la taille souhaitée, le manchon 14 est placé extérieurement à l'extrémité de la partie creuse du brin 3 de manière que les ouvertures 24 du manchon soient en regard d'une ouverture de chaque paroi latérale de la partie creuse. La partie intérieure du manchon a une forme adaptée pour venir en contact direct avec les surfaces extérieures de la partie creuse.

Le support 22 est par la suite introduit dans la partie creuse jusqu'à ce que l'ouverture traversante 25 de la partie du connecteur à fixer soit en regard des ouvertures du manchon 14. Finalement pour la fixation de cette partie du fermoir, la goupille 20 peut être insérée depuis une des ouvertures 24 du manchon 14 jusqu'à l'autre ouverture 24 en traversant les ouvertures respectives 21 de la partie creuse et l'ouverture 25 du connecteur.

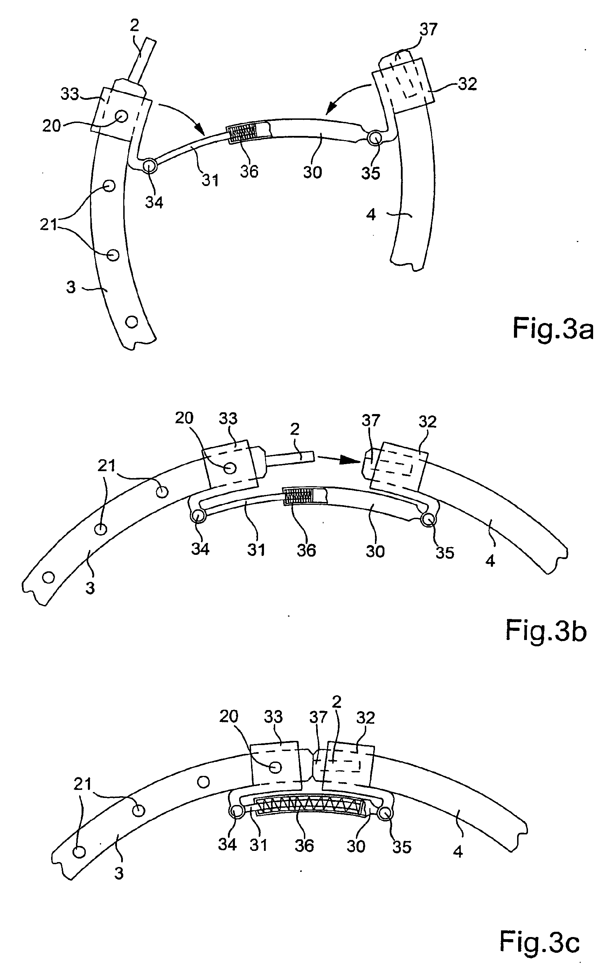

Un second mode de réalisation du bracelet à fermoir est montré aux figures 3a à 3c. Le fermoir reliant une extrémité de chaque brin de bracelet est du type à boucle déployante.

Il est à noter qu'uniquement les éléments du bracelet à fermoir qui se différencient de ceux décrits ci-dessus sont expliqués. Les éléments de ce second mode de réalisation qui sont identiques à ceux du premier mode de réalisation portent des signes de référence identiques.

Dans ce second mode de réalisation, la base de ce fermoir est extensible. Pour ce faire, la base comprend un réceptacle courbe 30 et un élément courbe 31 pouvant coulisser en partie dans le réceptacle. Cet élément est maintenu en partie à l'intérieur du réceptacle par un ressort de rappel 36.

Un premier membre 33 du fermoir est articulé autour d'un axe de rotation 34 à une extrémité d'une partie de l'élément sortant du réceptacle, et un second membre 32 du fermoir est articulé autour d'un axe de rotation 35 à une extrémité opposée du réceptacle 30. Le premier membre 33 est fixé à une extrémité du brin 3, alors que le second membre 32 est fixé à une extrémité du second brin. Le premier membre est fixé au brin 3 par une goupille 20 traversant une ouverture de chaque paroi latérale du brin 3 à proximité de son extrémité où est monté le connecteur électrique 2.

Le ressort de rappel 36 dans le réceptacle tire l'élément 31 vers l'intérieur du réceptacle de manière à assurer la fermeture du fermoir quand le connecteur 2 en tant que partie mâle est inséré dans un compartiment 37 représentant la partie femelle à l'extrémité du brin 4. Etant donné que le réceptacle 30 et l'élément coulissant 31 sont courbes, le compartiment doit être de dimension suffisante pour ne pas endommager le connecteur électrique lors de son introduction ou de son retrait dudit compartiment.

A la figure 3a, le fermoir est complètement ouvert avec l'élément 31 comprimant le ressort de rappel dans le réceptacle 30. Ce ressort de rappel peut être un ressort de compression. Bien entendu, cette position du fermoir est obtenue manuellement en tirant sur chaque membre 33 et 34 pour comprimer ledit ressort 36. Pour pouvoir fermer ledit fermoir, les membres 33 et 32 doivent être rabattus du côté du réceptacle et de l'élément coulissant comme montré par les flèches.

A la figure 3b, les membres 32 et 33 sont montrés rabattus du côté du réceptacle 30 et de l'élément coulissant 31. Dans cette position ouverte, le connecteur électrique 2 est dirigé vers le compartiment 37 qui doit le recevoir. La flèche indique le mouvement du connecteur 2 en direction du compartiment 37 pour fermer le fermoir.

Finalement à la figure 3c, le fermoir du bracelet est montré dans une position de fermeture avec le connecteur électrique en tant que partie mâle logé dans le compartiment 37 en tant que partie femelle. Le ressort de rappel 36 maintient cette position de fermeture sans action manuelle sur l'un ou l'autre membre 32 et 33.

Un troisième mode de réalisation du bracelet à fermoir est montré aux figures 4a et 4b dans une position d'ouverture du fermoir. Le bracelet de ce troisième mode de réalisation est du type ouvert, c'est-à-dire qu'en position d'ouverture, la partie du fermoir fixée à l'extrémité du brin 3 est séparée de la partie du fermoir fixée à l'extrémité du brin 4.

Comme précédemment uniquement les éléments du bracelet à fermoir qui se différencient de ceux décrits ci-dessus sont expliqués en détail. Les éléments de ce troisième mode de réalisation qui sont identiques à ceux des premier et second modes de réalisation portent des signes de référence identiques.

Un manchon rigide 44 est monté à l'extrémité de la partie creuse du brin 3, ainsi que le connecteur électrique 2 du type bus série universel afin de constituer une partie mâle du fermoir. Ce manchon 44 est.placé sur les surfaces extérieures de cette partie creuse, alors qu'une partie du connecteur 2 avec le support portant le composant électronique est introduit dans la partie creuse.

Comme expliqué en référence à la figure 2, une goupille de fixation 20 passe à travers des ouvertures du manchon 44, une ouverture de chaque paroi latérale à l'extrémité du brin 3 et une ouverture traversante pratiquée dans le connecteur électrique. De préférence, la partie du connecteur 2 introduite dans la partie creuse est en contact avec les surfaces intérieures de ladite partie creuse de manière à être maintenue fixement à l'extrémité du brin 3.

Dans ce troisième mode de réalisation, les ouvertures 7 du connecteur électrique 2 en tant que partie mâle font partie de moyens de fermeture du fermoir.

L'autre partie femelle du fermoir est fixée à l'extrémité du brin 4. Cette partie femelle du fermoir comprend un bloc de fixation 45 dans lequel est pratiqué une cavité 43 de forme complémentaire au connecteur pour le recevoir en position de fermeture du fermoir. Un organe de blocage 46 est monté rotatif dans le bloc 45 autour d'un axe de rotation 40 disposé transversalement au bracelet. Deux crochets 46a à l'extrémité avant de cet organe de blocage font partie des moyens de fermeture du fermoir pour pouvoir être introduits dans les ouvertures du connecteur dans une position de fermeture du fermoir. La partie arrière de cet organe disposée à l'extérieur du bloc de fixation 45 peut être actionnée manuellement à l'encontre de la force de rappel d'un ressort non représenté pour l'ouverture du fermoir. Une butée arrière de l'organe de blocage vient en contact d'une butée intérieure du bloc de fixation 45 pour maintenir cet organe de blocage en position de fermeture grâce à la force du ressort.

La figure 5 représente une montre-bracelet 50 pourvue d'un bracelet du type décrit en référence aux figures 4a et 4b. La montre-bracelet comprend des boutons de sélection 51 disposés autour du boîtier 53, un mouvement horloger ou un circuit garde-temps à l'intérieur de son boîtier 53, ainsi qu'un composant électrique ou électronique 52. Un bus de pistes de connexion 54 relie de manière connue les pistes métalliques du connecteur électrique 2 au composant électrique ou électronique placé à l'intérieur du boîtier. Dans une position d'ouverture du fermoir du bracelet, le connecteur électrique 2 peut être branché à un connecteur de forme complémentaire d'un appareil électrique, tel qu'une station d'ordinateur ou un chargeur pour opérer une transmission de données et/ou d'énergie électrique.

A partir de la description qui vient d'être faite de multiples variantes de réalisation du bracelet à fermoir ou de la montre-bracelet peuvent être conçues par l'homme du métier sans sortir du cadre de l'invention définie par les revendications. Le bracelet peut ne comprendre que les moyens de connexion électrique avec des pistes conductrices intégrées dans un des brins du bracelet pour établir une liaison électrique avec un composant logé dans un boîtier d'un objet portable. Le bracelet peut n'être constitué que d'un unique brin aux extrémités duquel est placé le fermoir avec le connecteur électrique. Ce connecteur électrique peut être d'un autre type qu'un bus série universel et être fixé sans manchon directement à l'extrémité d'un des brins, qui ne comprend pas de partie creuse et d'ouvertures sur les parois latérales.

## Revendications

1. Bracelet à fermoir (1) comprenant des moyens de connexion électrique (2) pour être reliés électriquement à au moins un composant électrique ou électronique (23), les moyens de connexion électrique comprenant un connecteur électrique (2) disposé dans une partie du fermoir, ledit connecteur étant configuré de manière à pouvoir être connecté dans une position d'ouverture du fermoir à un connecteur de forme complémentaire d'un appareil électrique pour opérer une transmission d'énergie et/ou de données avec au moins un composant électrique ou électronique, le connecteur électrique fixé à une extrémité d'un brin (3) du bracelet constituant une partie mâle du fermoir, qui est recouverte en position de fermeture du fermoir par une pièce de fermeture (6, 37, 43), **caractérisé en ce que** la pièce de fermeture, qui recouvre la partie mâle du fermoir, est située sur une autre extrémité du même brin ou d'une extrémité d'un autre brin du bracelet.

2. Bracelet selon la revendication 1, **caractérisé en ce que** le connecteur électrique définit un connecteur électrique du type bus série universel de manière à pouvoir être connecté à un connecteur de forme complémentaire d'une station d'ordinateur pour le transfert de données.

3. Bracelet selon l'une des revendications 1 et 2, **caractérisé en ce qu'**il comprend le composant électrique ou électronique relié électriquement au connecteur électrique.

4. Bracelet selon l'une des revendications 1 à 3, **caractérisé en ce que** le fermoir comprend une partie mâle constituée par le connecteur, qui peut être insérée dans une partie femelle en position de fermeture du fermoir.

5. Bracelet selon la revendication 4, **caractérisé en ce que** la partie femelle d'une autre extrémité du même brin du bracelet ou d'une extrémité d'un autre brin (4) du bracelet comprend une cavité (37; 43) de forme complémentaire au connecteur électrique.

6. Bracelet selon l'une des revendications précédentes, **caractérisé en ce que** le fermoir du type à boucle déployante comprend une base (10a, 10b: 30, 31), et deux lames (11, 12) ou deux membres (32, 33) articulés chacun à une extrémité opposée de la base, la première lame (11) ou le premier membre (33) étant relié à l'extrémité d'un premier brin (3) du bracelet, alors que la seconde lame (12) ou le second membre (32) est relié à l'extrémité d'un second brin (4) du bracelet, et **en ce que** le connecteur électrique est fixé à l'extrémité du premier brin du bracelet.

7. Bracelet selon la revendication 6, **caractérisé en ce que** la base du type extensible comprend un réceptacle (30) et un élément (31) pouvant coulisser en partie dans le réceptacle, l'élément étant maintenu en partie à l'intérieur du réceptacle par un ressort de rappel (36) en direction d'une position de fermeture du fermoir, **en ce que** le connecteur est fixé à une extrémité du premier brin (3) avec une partie du premier membre (33), et **en ce que** le second membre (32) est fixé à une extrémité du second brin (4), qui comprend la cavité (37) de forme complémentaire au connecteur pour le recevoir en position de fermeture.

8. Bracelet selon la revendication 6, **caractérisé en ce que** la base comprend deux bras (10a, 10b) parallèles espacés par une barre centrale (17), une extrémité de la première lame (11) étant articulée entre les bras à une première extrémité des bras, alors qu'une extrémité de la seconde lame (12) est articulée entre les bras à une seconde extrémité opposée des bras, **en ce que** l'autre extrémité de la première lame est reliée de manière rotative à un manchon (14) fixé sur des surfaces extérieures du premier brin (3), alors que l'autre extrémité de la seconde lamie est reliée de manière rotative à une pièce de fermeture (6) fixée à l'extrémité du second brin (4), cette pièce de fermeture étant destinée à recouvrir le connecteur électrique en position de fermeture du fermoir, et **en ce que** des moyens de fermeture sont prévus dans la base et sur les lames pour bloquer une partie de chaque lame dans la base en position de fermeture, et **en ce qu'**un bouton de déverrouillage (13) monté sur la base peut être manuellement actionné pour permettre de libérer les lames de leur position de fermeture.

9. Bracelet selon la revendication 8, **caractérisé en ce qu'**un soufflet (5) du fermoir est fixé à une extrémité du second brin du bracelet en dessous de la pièce de fermeture pour enfermer et protéger le connecteur électrique en position de fermeture du fermoir.

10. Bracelet selon l'une des revendication précédentes, **caractérisé en ce que** le composant électronique est une mémoire non volatile (23) dans laquelle peuvent être mémorisées des données personnelles, cette mémoire étant placée sur un support fixé directement au connecteur électrique et relié électriquement. à des pistes conductrices (8) du connecteur.

11. Bracelet selon l'une des revendications précédentes, **caractérisé en ce que** le premier brin du bracelet recevant le connecteur électrique comprend une partie creuse depuis l'extrémité liée au fermoir qui s'étend sur au moins une portion de la longueur du brin, cette partie creuse étant délimitée par une paroi supérieure et une paroi inférieure espacées par deux parois latérales, et **en ce qu'**une partie du connecteur électrique avec le support de la mémoire est logée et fixée dans une portion de la partie creuse.

12. Bracelet selon la revendication 11, **caractérisé en ce que** plusieurs ouvertures (21) de forme circulaire sont régulièrement espacées de part et d'autre des parois latérales de la partie creuse du brin souple et dans le sens de la longueur du bracelet de manière à pouvoir adapter la taille du brin au poignet d'un utilisateur.

13. Bracelet selon l'une des revendications 11 et 12, **caractérisé en ce que** la partie du connecteur à fixer peut comprendre également dans une direction transversale au bracelet une ouverture traversante (25) pour le passage d'une goupille de fixation (20) au bracelet, et **en ce qu'**un manchon (14; 44) placé sur les surfaces extérieures de la partie creuse est fixé à l'aide de la goupille (20) avec le connecteur électrique, ladite goupille de fixation traversant une ouverture de chaque paroi latérale du brin de bracelet à proximité de l'extrémité dudit brin.

14. Bracelet selon la revendication 4, **caractérisé en ce que** le connecteur du type à bus série universel, (2) comprend au moins une ouverture (7) sur une paroi extérieure pour coopérer avec au moins un crochet (46a) d'un organe de blocage (46) d'un bloc de fixation (45) de la partie femelle du fermoir afin de maintenir en position de fermeture le fermoir quand le connecteur est logé dans une cavité (43) de forme complémentaire du bloc de fixation, une partie de l'organe de blocage extérieur au bloc de fixation pouvant être manuellement activée pour l'ouverture du fermoir.

15. Montre (50) comprenant un bracelet (1) à fermoir selon l'une des revendications précédentes, la montre-bracelet ayant au moins un composant électrique ou électronique (52) relié électriquement à des moyens de connexion électrique du bracelet, les moyens de connexion électrique comprenant un connecteur électrique (2) disposé dans une partie du fermoir, ledit connecteur étant configuré de manière à pouvoir être connecté dans une position d'ouverture du fermoir à un connecteur de forme complémentaire d'un appareil électrique pour opérer une transmission d'énergie électrique et/ou de données, **caractérisée en ce que** le connecteur électrique fixé à une extrémité d'un brin (3) du bracelet constitue une partie mâle du fermoir, qui est recouverte en position de fermeture du fermoir par une pièce de fermeture (6, 37, 43) d'une autre extrémité du même brin ou d'une extrémité d'un autre brin du bracelet.

16. Montre (50) selon la revendication 15, **caractérisée en ce que** le composant électronique est une mémoire non volatile placée à l'intérieur du boîtier (53) de la montre, le composant étant relié électriquement au connecteur électrique disposé dans une partie du fermoir par un bus de pistes de connexion (54), et **en ce que** le connecteur électrique définit un connecteur électrique du type bus série universel de manière à pouvoir être connecté à un connecteur de forme complémentaire d'une station d'ordinateur pour le transfert de données.

## Claims

1. Wristband with a clasp (1) including electrical connection means (2) for electrical connection to at least one electric or electronic component (23), the electrical connection means including an electric connector (2) arranged in one part of the clasp, said connector being configured so as to be able to be connected, when the clasp is in the open position, to a connector of complementary shape of an electric apparatus to carry out data and/or electric energy transmission with at least one electric or electronic component, the electric connector fixed to one end of a strand (3) of the wristband forming a male part of the clasp, which is covered when the clasp is in the closed position by a fastening piece (6, 37, 43) **characterized in that** the fastening piece, which covers the male part of the clasp, is located on another end of the same strand or an end of the other wristband strand.

2. Wristband according to claim 1, **characterized in that** the electric connector defines an electric connector of the universal serial bus type so as to be able to be connected to a connector of complementary shape of a computer station for data transfer.

3. Wristband according to any of claims 1 and 2, **characterized in that** it includes the electric or electronic component electrically connected to the electric connector.

4. Wristband according to any of claims 1 to 3, **characterized in that** the clasp includes a male part formed by the connector, which can be inserted into a female part when the clasp is in the closed position.

5. Wristband according to claim 4, **characterized in that** the female part of another end of the same wristband strand or one end of another strand (4) of the wristband includes a cavity (37; 43) of complementary shape to the electric connector.

6. Wristband according to any of the preceding claims, **characterized in that** the clasp of the unfolding buckle type includes a base (10a, 10b; 30, 31), and two strips (11, 12) or two limbs (32, 33) each hinged to an opposite end of the base, the first strip (11) or the first limb (33) being connected to the end of a first wristband strand (3), whereas the second strip (12) or the second limb (32) is connected to the end of a second wristband strand (4), and **in that** the electric connector is fixed to the end of the first wristband strand.

7. Wristband according to claim 6, **characterized in that** the extending type base includes a receptacle (30) and an element (31) able to slide in part into the receptacle, the element being held in part inside the receptacle by a return spring (36) in the direction of a closed position of the clasp, **in that** the connector is fixed to one end of the first strand (3) with one part of the first limb (33), and **in that** the second limb (32) is fixed to one end of the second strand (4), which includes the cavity (37) of complementary shape to the connector to receive the latter in the closed position.

8. Wristband according to claim 6, **characterized in that** the base includes two parallel arms (10a, 10b) separated by a central bar (17), one end of the first strip (11) being hinged between the arms at one end of the arms, whereas one end of the second strip (12) is hinged between the arms to a second opposite end of the arms, **in that** the other end of the first strip is rotatably connected to a sleeve (14) fixed on exterior surfaces of the first strand (3), whereas the other end of the second strip is rotatably connected to a fastening piece (6) fixed to one end of the second strand (4), this fastening piece covering the electric connector when the clasp is in the closed position, **in that** the fastening means are provided in the base and on the strips to lock one part of each strip into the base in the closed position, and **in that** an unlocking button (13) mounted on the base can be activated manually to release the strips from their closed position.

9. Wristband according to claim 8, **characterized in that** bellows (5) of the clasp are fixed to one end of the second wristband strand underneath the fastening piece to enclose and protect the electric connector when the clasp is in the closed position.

10. Wristband according to any of the preceding claims, **characterized in that** the electronic component is a non-volatile memory (23) in which personal data can be stored, the memory being placed on a support fixed directly to the electric connector and electrically connected to conductive paths (8) of the connector.

11. Wristband according to any of the preceding claims, **characterized in that** the first wristband strand receiving the electric connector includes a hollow part from the free end of the clasp which extends over at least one portion of the length of strand, this hollow part being delimited by a top wall and a bottom wall separated by two lateral walls, and **in that** one part of the electric connector with the memory support is housed and fixed into one portion of the hollow part.

12. Wristband according to claim 11, **characterized in that** several apertures (21) of circular shape are regularly spaced on either side of the lateral walls of the hollow part of the flexible strand and in the lengthways direction of the wristband so that the size of the strand can be adjusted to a user's wrist.

13. Wristband according to any of claims 11 and 12, **characterized in that** the part of the connector to be fixed can also include, in a transverse direction to the wristband, a through aperture (25) for the passage of a pin (20) to be secured to the wristband, and **in that** a sleeve (14; 44) placed on the external surfaces of the hollow part is fixed using the pin (20) with the electric connector, said securing pin passing through one aperture of each lateral wall of the wristband strand in proximity to the end of said strand.

14. Wristband according to claim 4, **characterized in that** the connector of the universal serial bus type (2) includes at least one aperture (7) on an external wall for cooperating with at least one hook (46a) of a locking member (46) of a securing unit (45) of the female part of the clasp in order to hold the clasp in the closed position when the connector is housed in a cavity (43) of complementary shape of the securing unit, one part of the locking member outside the securing unit being able to be activated manually in order to open the clasp.

15. Watch (50) including a wristband (1) with a clasp according to any of the preceding claims, the wristwatch having at least one electric or electronic component (52) electrically connected to electric connection means of the wristband, the electric connection means including an electric connector (2) arranged in one part of the clasp, said connector being configured so as to be able to be connected, when the clasp is in the open position, to a connector of complementary shape of an electric apparatus to carry out electric energy and/or data transmission, **characterized in that** the electric connector fixed to one end of one wristband strand (3) forms the male part of the clasp, which is covered when the clasp is in the closed position by a fastening piece (6, 37, 43) of another end of the same strand or one end of another strand of the wristband.

16. Watch (50) according to claim 15, **characterized in that** the electronic component is a non-volatile memory placed inside the case (53) of the watch, the component being electrically connected to the electric connector placed in one part of the clasp by a connection path bus (54), and **in that** the electric connector defines a universal serial bus type connector so as to be able to be connected to a connector of complementary shape of a computer station for data transfer.

## Patentansprüche

1. Armband mit Schließe (1), mit Mitteln (2) zur elektrischen Verbindung, um mit wenigstens einem elektrischen oder elektronischen Bauteil (23) elektrisch verbunden zu werden, wobei die Mittel zur elektrischen Verbindung einen elektrischen Verbinder (2), der in einem Teil der Schließe angeordnet ist, enthalten, wobei der Verbinder in der Weise konfiguriert ist, dass er in einer offenen Position der Schließe mit einem Verbinder mit komplementärer Form eines elektrischen Geräts verbunden werden kann, um eine Übertragung von Energie und/oder von Daten mit wenigstens einem elektrischen oder elektronischen Bauteil vorzunehmen, wobei der elektrische Verbinder, der an einem Ende eines Abschnitts (3) des Armbandes befestigt ist, ein Steckerteil der Schließe bildet, das in der geschlossenen Position der Schließe durch ein Schließteil (6, 37, 43) abgedeckt ist, **dadurch gekennzeichnet, dass** sich das Schließteil, das das Steckerteil der Schließe abdeckt, an einem anderen Ende desselben Abschnitts oder an einem Ende eines anderen Abschnitts des Armbandes befindet.

2. Armband nach Anspruch 1, **dadurch gekennzeichnet, dass** der elektrische Verbinder einen elektrischen Verbinder des Typs universeller serieller Bus definiert, derart, dass er mit einem Verbinder mit komplementärer Form einer Rechnerstation für die Übertragung von Daten verbunden werden kann.

3. Armband nach einem der Ansprüche 1 und 2, **dadurch gekennzeichnet, dass** es das elektrische oder elektronische Bauteil enthält, das mit dem elek-trischen Verbinder elektrisch verbunden ist.

4. Armband nach einem der Ansprüche 1 bis 3, **dadurch gekennzeichnet, dass** die Schließe ein Steckerteil enthält, das durch den Verbinder gebildet ist und das in ein Buchsenteil in der geschlossenen Position der Schließe eingesetzt werden kann.

5. Armband nach Anspruch 4, **dadurch gekennzeichnet, dass** der Buchsenteil eines anderen Endes desselben Abschnitts des Armbandes oder des Endes eines anderen Abschnitts (4) des Armbandes einen Hohlraum (37; 43) mit einer zum elektrischen Verbinder komplementären Form enthält.

6. Armband nach einem der vorhergehenden Ansprüche, **dadurch gekennzeichnet, dass** die Schließe vom Typ mit aufklappbarer Spange eine Basis (10a, 10b; 30, 31) und zwei Plättchen (11, 12) oder zwei Glieder (32, 33), die jeweils an einem gegenüberliegenden Ende der Basis angelenkt sind, umfasst, wobei das erste Plättchen (11) oder das erste Glied (33) mit dem Ende eines ersten Abschnitts (3) des Armbandes verbunden ist, während das zweite Plättchen (12) oder das zweite Glied (32) mit dem Ende eines zweiten Abschnitts (4) des Armbandes verbunden ist, und dass der elektrische Verbinder an dem Ende des ersten Abschnitts des Armbandes befestigt ist.

7. Armband nach Anspruch 6, **dadurch gekennzeichnet, dass** die Basis des verlängerbaren Typs einen Aufnahmeraum (30) und ein Element (31), das teilweise in den Aufnahmeraum gleiten kann, umfasst, wobei das Element durch eine Rückstellfeder (36) teilweise innerhalb des Aufnahmeraums in Richtung einer geschlossenen Position der Schließe gehalten wird, dass der Verbinder an einem Ende des ersten Abschnitts (3) mit einem Teil des ersten Glieds (33) befestigt ist und dass das zweite Element (32) an einem Ende des zweiten Abschnitts (4), der den Hohlraum (37) mit einer zum Verbinder komplementären Form aufweist, um es in der geschlossenen Position aufzunehmen, befestigt ist.

8. Armband nach Anspruch 6, **dadurch gekennzeichnet, dass** die Basis zwei parallele Arme (10a, 10b), die durch einen Mittelstab (17) voneinander beabstandet sind, umfasst, wobei ein Ende des ersten Plättchens (11) zwischen den Armen an einem ersten Ende der Arme angelenkt ist, während ein Ende des zweiten Plättchens (12) zwischen den Armen an einem gegenüberliegenden zweiten Ende der Arme angelenkt ist, dass das andere Ende des ersten Plättchens mit einer Muffe (14) drehbar verbunden ist, die an äußeren Oberflächen des ersten Abschnitts (3) befestigt ist, während das andere Ende des zweiten Plättchens drehbar mit einem Schließteil (6) verbunden ist, das am Ende des zweiten Abschnitts (4) befestigt ist, wobei dieses Schließteil dazu vorgesehen ist, den elektrischen Verbinder in der geschlossenen Position der Schließe abzudecken, dass in der Basis und an den Plättchen Schließmittel vorgesehen sind, um einen Teil jedes Plättchens in der Basis in der geschlossenen Position zu blockieren, und dass eine Entriegelungstaste (13), die an der Basis montiert ist, manuell betätigt werden kann, um die Plättchen aus ihrer geschlossenen Position freizugeben.

9. Armband nach Anspruch 8, **dadurch gekennzeichnet, dass** an einem Ende des zweiten Abschnitts des Armbandes unterhalb des Schließteils ein Balg (5) der Schließe befestigt ist, um den elektrischen Verbinder in der geschlossenen Position der Schließe zu umgeben und zu schützen.

10. Armband nach einem der vorhergehenden Ansprüche, **dadurch gekennzeichnet, dass** das elektronische Bauteil ein nichtflüchtiger Speicher (23) ist, in dem persönliche Daten gespeichert werden können, wobei dieser Speicher auf einem Träger angeordnet ist, der direkt an dem elektrischen Verbinder befestigt ist und mit Leiterbahnen (8) des Verbinders elektrisch verbunden ist.

11. Armband nach einem der vorhergehenden Ansprüche, **dadurch gekennzeichnet, dass** der erste Abschnitt des Armbandes, der den elektrischen Verbinder aufnimmt, ein von dem mit der Schließe verbundenen Ende ausgehendes hohles Teil umfasst, das sich wenigstens über einen Teil der Länge des Abschnitts erstreckt, wobei dieses hohle Teil durch eine obere Wand und durch eine untere Wand, die durch zwei seitliche Wände beanstandet sind, begrenzt ist, und dass ein Teil des elektrischen Verbinders mit dem Träger des Speichers in einem Teil des hohlen Teils angeordnet und befestigt ist.

12. Armband nach Anspruch 11, **dadurch gekennzeichnet, dass** mehrere kreisförmige Öffnungen (21) beiderseits der seitlichen Wände des hohlen Teils des elastischen Abschnitts und in Richtung der Länge des Armbandes regelmäßig beabstandet sind, derart, dass die Größe des Abschnitts an das Handgelenk eines Anwenders angepasst werden kann.

13. Armband nach einem der Ansprüche 11 und 12, **dadurch gekennzeichnet, dass** der zu befestigende Teil des Verbinders außerdem in einer Querrichtung des Armbandes eine Durchgangsöffnung (25) für den Durchgang eines Befestigungsstifts (20) am Armband aufweisen kann und dass eine Muffe (14; 44), die an den äußeren Oberflächen des hohlen Teils angeordnet ist, mit Hilfe des Stifts (20) an dem elektrischen Verbinder befestigt ist, wobei der Befestigungsstift durch eine Öffnung jeder seitlichen Wand des Abschnitts des Armbands in der Nähe des Endes des Abschnitts verläuft.

14. Armband nach Anspruch 4, **dadurch gekennzeichnet, dass** der Verbinder des Typs universeller serieller Bus (2) in seiner äußeren Wand wenigstens eine Öffnung (7) besitzt, um mit wenigstens einem Haken (46a) eines Blockierorgans (46) eines Befestigungsblocks (45) des Buchsenteils der Schließe zusammenzuwirken, um die Schließe in der geschlossenen Position zu halten, wenn der Verbinder in einem Hohlraum (43) mit zu dem Befestigungsblock komplementärer Form untergebracht ist, wobei ein Teil des äußeren Blockierorgans am Befestigungsblock manuell betätigt werden kann, um die Schließe zu öffnen.

15. Uhr (50), die ein Armband (1) mit Schließe nach einem der vorhergehenden Ansprüche umfasst, wobei die Armbanduhr wenigstens ein elektrisches oder elektronisches Bauteil (52) besitzt, das mit Mitteln zur elektrischen Verbindung des Armbandes elektrisch verbunden ist, wobei die Mittel zur elektrischen Verbindung einen elektrischen Verbinder (2) umfassen, der in einem Teil der Schließe angeordnet ist, wobei der Verbinder in der Weise konfiguriert ist, dass er in einer geöffneten Position der Schließe mit einem Verbinder mit komplementärer Form eines elektrischen Geräts verbunden werden kann, um eine Übertragung von elektrischer Energie und/oder von Daten vorzunehmen, **dadurch gekennzeichnet, dass** der an einem Ende eines Abschnitts (3) des Armbandes befestigte elektrische Verbinder ein Steckerteil der Schließe bildet, das in der geschlossenen Position der Schließe durch ein Schließteil (6, 37, 43) eines anderen Endes desselben Abschnitts oder eines Endes eines anderen Abschnitts des Armbandes abgedeckt ist.

16. Uhr (50) nach Anspruch 15, **dadurch gekennzeichnet, dass** das elektronische Bauteil ein nichtflüchtiger Speicher ist, der innerhalb des Gehäuses (53) der Uhr angeordnet ist, wobei das Bauteil mit dem elektrischen Verbinder, der in einem Teil der Schließe angeordnet ist, über einen Verbindungsbahnen-Bus (54) elektrisch verbunden ist, und dass der elektrische Verbinder einen elektrischen Verbinder des Typs universeller serieller Bus definiert, derart, dass er mit einem Verbinder mit komplementärer Form einer Rechnerstation für die Übertragung von Daten verbunden werden kann.
